# EUROPEAN PATENT APPLICATION

(11) **EP 3 318 364 A1**
(43) Date of publication of application: **09.05.2018**
(21) Application number: 17199715.8
(22) Date of filing: 02.11.2017
(51) Int. Cl.: B23P 6/00, F01D 5/00, B23K 1/00

(54) **THREADED COUPON FOR REPAIR OF SUPERALLOY PART**

(30) Priority: 08.11.2016 US 201615346042
(71) Applicant: General Electric Company, Schenectady, NY 12345 (US)
(72) Inventor: Eminoglu, Cem Murat, Greenville, South Carolina 29615 (US); Cui, Yan, Greenville, South Carolina 29615 (US); Ford, Cody Jermaine, Greenville, South Carolina 29615 (US); Vantassel, Brad Wilson, Greenville, South Carolina 29615 (US)
(74) Representative: Foster, Christopher Michael

(57) **Abstract**

A coupon (202, 222) for repairing a part (210) is disclosed. The coupon (202, 222) includes an outwardly threaded body (204) configured to mate with an inwardly threaded opening (206) in a damaged area (200) of the part (210). The part (210) and/or coupon (202, 222) may include a superalloy. The threaded arrangement converts tensile stresses into shear stresses that allow the repair to exhibit material characteristics as good as or better than the superalloy. A method of using the coupon (202, 222) to repair a part (210) using brazing, and a turbomachine (100) part (210) using the coupon (202, 222), are also disclosed.

## Description

### BACKGROUND OF THE INVENTION

The disclosure relates generally to industrial machine part repair, and more particularly, to a threaded coupon for repair of superalloy parts.

Industrial machine parts are exposed to a wide variety of extreme stresses and environments that can cause damage over time. For example, hot gas path (HGP) components in turbomachinery such as turbine blades and nozzles, e.g., in a leading edge, a trailing edge or fillets of a turbine blade, are exposed to extreme stresses and environment. Conventionally, a damaged industrial part such as an HGP component is repaired by removing the damaged area, preferably via machining, then replacing the damaged area with a replacement piece, referred to as a coupon. The removed area and the coupon have linear geometrical features designed to optimize the strength of the repaired area, e.g., to accommodate tensile stress. The coupon's material's physical properties are generally similar or superior to the HGP component material into which they are being placed. The weld material also ideally has similar or identical material properties of the HGP component. Consequently, the weld joints exhibit similar properties as the HGP component and the coupon. Advances in turbomachinery technology however have led to the use of more advanced materials such as superalloys like high gamma prime superalloys, which cannot be repaired using conventional techniques.

### BRIEF DESCRIPTION OF THE INVENTION

A first aspect of the disclosure provides a coupon for repairing a part, the coupon comprising: an outwardly threaded body configured to mate with an inwardly threaded opening in a damaged area of the part.

A second aspect of the disclosure provides a method of repairing a part, the method comprising: removing a damaged area of the part by forming an inwardly threaded opening therein; and inserting an outwardly threaded coupon into the inwardly threaded opening; and brazing the outwardly threaded coupon to the inwardly threaded opening.

A third aspect of the disclosure provides a turbomachine part, comprising: a superalloy; an inwardly threaded opening in the superalloy; and an outwardly threaded coupon mating with the inwardly threaded opening.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a cross-sectional view of an illustrative industrial machine in the form of a turbomachine.
FIG. 2 shows an enlarged cross-sectional area of the turbomachine of FIG. 1.
FIGS. 3 and 4 show perspective views of illustrative industrial parts in the form of a turbine blade and turbine nozzle, respectively.
FIG. 5 shows a perspective view of an outwardly threaded coupon for a damaged area of a part according to various embodiments.
FIG. 6 shows a cross-sectional view of an inwardly threaded opening in a damaged area of the part according to various embodiments.
FIG. 7 shows a perspective view of the outwardly threaded coupon in the inwardly threaded opening in the part according to various embodiments.
FIG. 8 shows another perspective view of the outwardly threaded coupon in the inwardly threaded opening in the part according to various embodiments.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As an initial matter, in order to clearly describe the current disclosure it will become necessary to select certain terminology when referring to and describing relevant machine components within a gas turbine. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

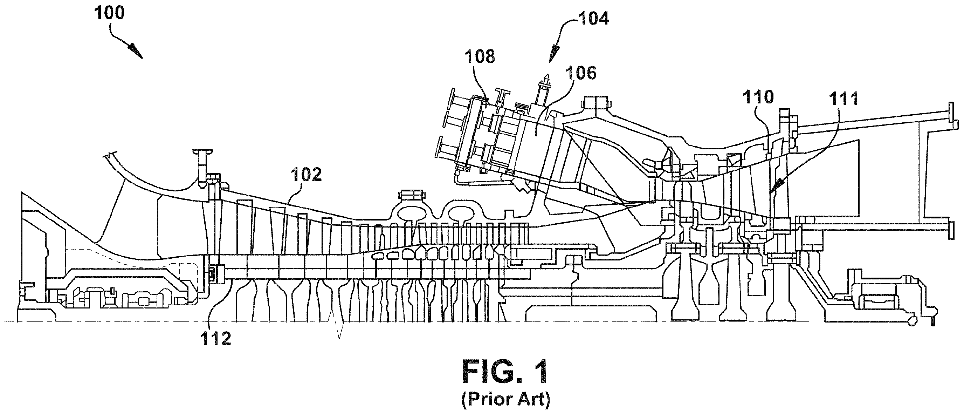

FIG. 1 shows a schematic illustration of an illustrative industrial machine, a part of which may be repaired according to teachings of the disclosure. In the example, the machine includes a turbomachine 100 in the form of a combustion or gas turbine system. Turbomachine 100 includes a compressor 102 and a combustor 104. Combustor 104 includes a combustion region 106 and a fuel nozzle assembly 108. Turbomachine 100 also includes a turbine 110 and a common compressor/turbine shaft 112 (sometimes referred to as a rotor 112). In one embodiment, the combustion turbine system is a MS7001FB engine, sometimes referred to as a 7FB engine, commercially available from General Electric Company, Greenville, S.C. The present disclosure is not limited to any one particular industrial machine, nor is it limited to any particular combustion turbine system and may be applied in connection with a wide variety of other industrial machines. Furthermore, the present disclosure is not limited to any particular turbomachine, and may be applicable to, for example, steam turbines, jet engines, compressors, turbofans, etc.

In operation, air flows through compressor 102 and compressed air is supplied to combustor 104. Specifically, the compressed air is supplied to fuel nozzle assembly 108 that is integral to combustor 104. Fuel nozzle assembly 108 is in flow communication with combustion region 106. Fuel nozzle assembly 108 is also in flow communication with a fuel source (not shown in FIG. 1) and channels fuel and air to combustion region 106. Combustor 104 ignites and combusts fuel. Combustor 104 is in flow communication with turbine assembly 110 for which gas stream thermal energy is converted to mechanical rotational energy. Turbine assembly 110 includes a turbine 111 that rotatably couples to and drives rotor 112. Compressor 102 also is rotatably coupled to rotor 112. In the illustrative embodiment, there is a plurality of combustors 106 and fuel nozzle assemblies 108.

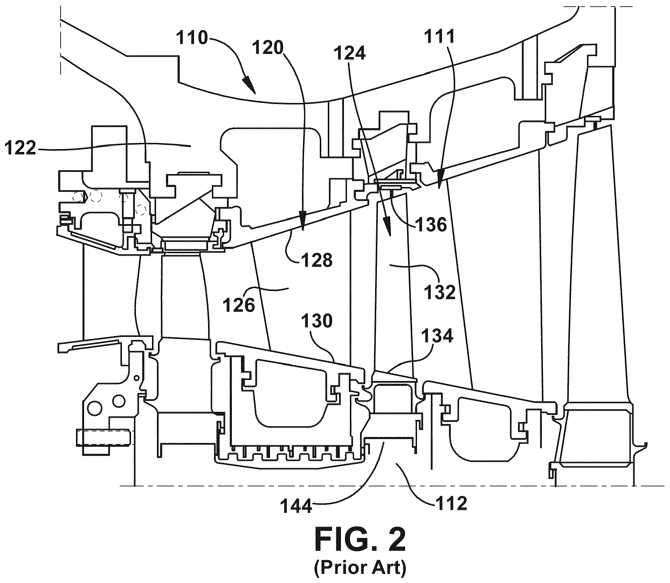

FIG. 2 shows an enlarged cross-sectional view of an illustrative turbine assembly 110 of turbomachine 100 (FIG. 1) that may be used with the gas turbine system in FIG. 1. Turbine 111 of turbine assembly 110 includes a row of nozzle or vanes 120 coupled to a stationary casing 122 of turbomachine 100 and axially adjacent a row of rotating blades 124. A nozzle or vane 126 may be held in turbine assembly 110 by a radially outer platform 128 and a radially inner platform 130. Row of blades 124 in turbine assembly 110 includes rotating blades 132 coupled to rotor 112 and rotating with the rotor. Rotating blades 132 may include a radially inward platform 134 (at root of blade) coupled to rotor 112 and a radially outward tip shroud 136 (at tip of blade). As used herein, the term "blade" or "hot gas path component" shall refer collectively to stationary vanes or blades 126 and rotating blades 132, unless otherwise stated.

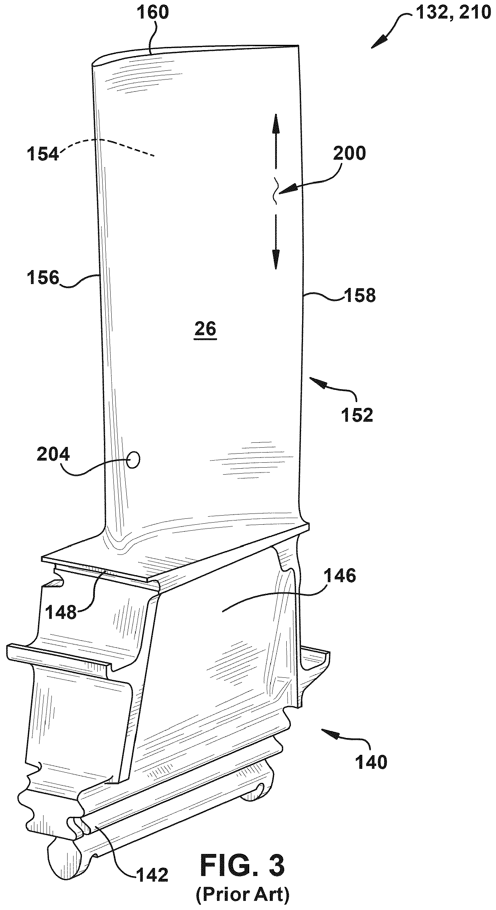

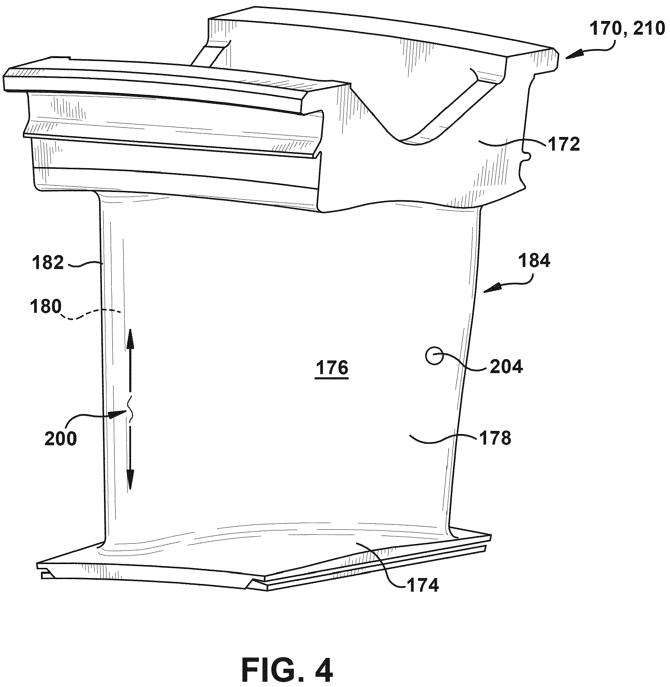

FIGS. 3 and 4 show illustrative hot gas path components of a turbomachine in which teachings of the disclosure may be employed. FIG. 3 shows a perspective view of a turbine rotor blade 132 of the type in which embodiments of the present disclosure may be employed. Turbine rotor blade 132 includes a root 140 by which rotor blade 132 attaches to rotor 112 (FIG. 2). Root 140 may include a dovetail 142 configured for mounting in a corresponding dovetail slot in the perimeter of a rotor wheel 144 (FIG. 2) of rotor 112 (FIG. 2). Root 140 may further include a shank 146 that extends between dovetail 142 and a platform 148, which is disposed at the junction of airfoil 150 and root 140 and defines a portion of the inboard boundary of the flow path through turbine assembly 110. It will be appreciated that airfoil 150 is the active component of rotor blade 132 that intercepts the flow of working fluid and induces rotor wheel 144 (FIG. 2) to rotate. It will be seen that airfoil 150 of rotor blade 132 includes a concave pressure side (PS) outer wall 152 and a circumferentially or laterally opposite convex suction side (SS) outer wall 154 extending axially between opposite leading and trailing edges 156, 158 respectively. Sidewalls 156 and 158 also extend in the radial direction from platform 148 to an outboard tip 160.

FIG. 4 shows a perspective view of a stationary vane 170 of the type in which embodiments of the present disclosure may be employed. Stationary vane 170 includes an outer platform 172 by which stationary vane 170 attaches to stationary casing 122 (FIG. 2) of turbomachine 100. Outer platform 172 may include any now known or later developed mounting configuration for mounting in a corresponding mount in the casing. Stationary vane 170 may further include an inner platform 174 for positioning between adjacent turbine rotor blades 132 (FIG. 3) platforms 148 (FIG. 3). Platform 172, 174 define respective portions of the outboard and inboard boundary of the flow path through turbine assembly 110 (FIG. 2). It will be appreciated that airfoil 176 is the active component of stationary vane 170 that intercepts the flow of working fluid and directs it towards turbine rotor blades 132 (FIG. 3). It will be seen that airfoil 176 of stationary vane 170 includes a concave pressure side (PS) outer sidewall 178 and a circumferentially or laterally opposite convex suction side (SS) outer sidewall 180 extending axially between opposite leading and trailing edges 182, 184 respectively. Sidewalls 178 and 180 also extend in the radial direction from platform 172 to platform 174. Embodiments of the disclosure described herein may be applied to any form of industrial machine part, such as turbine rotor blade 132 and/or stationary vane 170. It is understood that other features of blade 132 or vane 170, not described herein such as but not limited to internal cooling structures, cutout shape, outer wall angling/shape, etc., may be customized for the particular application, i.e., rotor blade or vane.

Embodiments of the disclosure provide a coupon for repairing a part of an industrial machine such as a part of turbomachine 100 (FIG. 1), e.g., blades 132 or nozzles 170 (FIGS. 3, 4) (referred to herein collectively as "part 210"). As understood in the art, when a part is damaged, the damaged area is removed, and a replacement part, called a coupon, is fixed in place to repair the damage. As shown in FIGS. 3 and 4, blade 132 or nozzle 170 may include a damaged area 200 for which a coupon according to embodiments of the disclosure may be applicable. The damaged area 200 can include any variety of damage now known or later discovered such as but not limited: cracks, surface roughness, dents, scratches, etc.

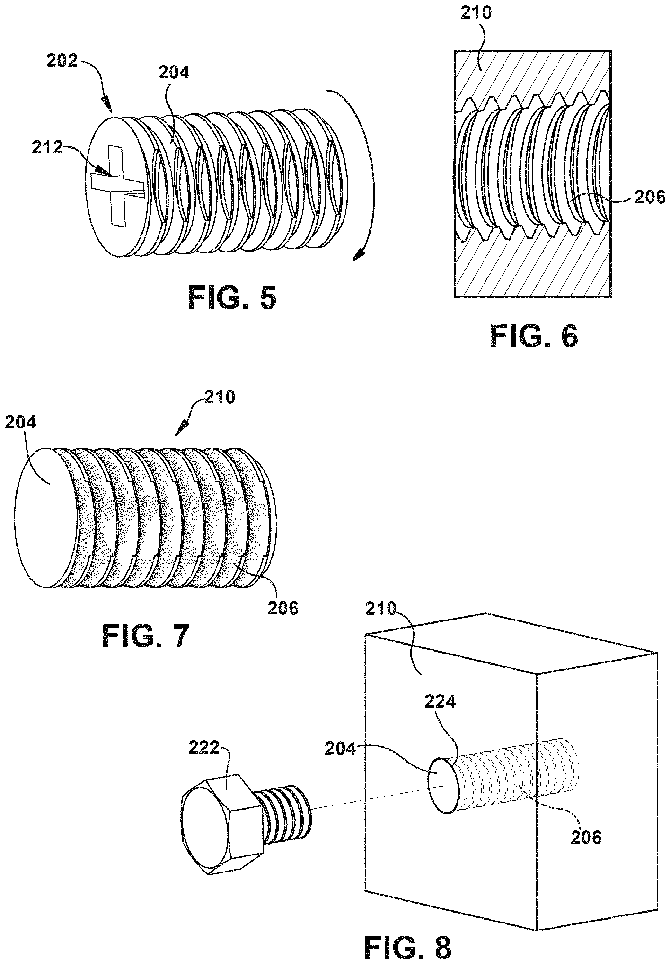

Referring to FIG. 5, a coupon 202 for repairing part 210 according to embodiments of the disclosure is illustrated. Although not limited to superalloys, teachings of the disclosure are especially advantageous where part 210 includes a superalloy. As used herein, "superalloy" refers to an alloy having numerous excellent physical characteristics compared to conventional alloys, such as but not limited to: high mechanical strength, high thermal creep deformation resistance, high corrosion or oxidation resistance, and good surface stability. Superalloy examples may include but are not limited to: Rene alloys like Rene 108, CM247,
Hastelloy, Waspaloy, Haynes alloys, Inconel, Incoloy, MP98T, TMS alloys, CMSX single crystal alloys. In one embodiment, superalloys for which teachings of the disclosure may be especially advantageous are those superalloys having a high gamma prime (γ') value. "Gamma prime" (γ') is the primary strengthening phase in nickel-based alloys. Example high gamma prime superalloys include but are not limited to: Rene 108, N5, GTD 444, MarM 247 and IN 738.

Superalloys provide a wide variety of superior physical characteristics, but do not lend themselves to conventional repair techniques such as welding. More particularly, with these superalloy materials, conventional welding of the coupon into place in part 210 is insufficient because the weld does not result in a structure that has the same valuable superalloy properties of the part and the coupon. Further, the welding may lead to additional damage, e.g., cracking, of part 210. Conventionally, cracks in a conventional IGT alloy part would be filled with brazing and/or welding, which places the brazed material and/or welding mostly under tensile stress. This type of repair is generally enough for conventional IGT alloy part since the repair process yields similar physical properties to that of the conventional alloy. However, conventional welds used with superalloys cannot survive the stresses in the repaired region, and may result in additional damage to the part and/or repaired area.

In order to address this situation and in contrast to conventional repair coupons, as shown in FIG. 5, coupon 202 includes an outwardly threaded body 204 configured to mate with an inwardly threaded opening 206 in damaged area 200 of part 210, e.g., blade 132 or nozzle 170. Coupon 202 may include the same superalloy as part 210 or another superalloy.

In a method of repairing part 210 according to embodiments of the disclosure, damaged area 200 is removed from part 210 by forming inwardly threaded opening 206. This process can be carried out using any now known or later developed technique, e.g., boring out damaged area 200 and threading the bore created thereby, e.g., using a commercial hole tapping machine. Coupon 202 can be formed using any now known or later developed technique for forming a thread on a rod member, e.g., using a die set to machine threads in a rod, additive manufacturing, etc. As shown in FIGS. 7 and 8, outwardly threaded coupon 202 can then be inserted into inwardly threaded opening 206, e.g., by rotating coupon 202 into opening 206 to thread body 204 therein. The depth and/or iteration of threads on body 204 of coupon 202 and/or opening 206 can be customized to create the desired mechanical properties based on a number of factors such as but not limited to: size of damaged area 200, size of coupon 202, size of opening 206, material of part 210 or coupon 202, and brazing material used. Coupon 202 can also include any now known or later developed mechanism 212 or allowing for a tool to rotate the coupon including but not limited to: screwdriver head (FIG. 5), bolt head (FIG. 8), roughened exterior for hand turning, etc. Coupon 202 can be sized lengthwise to match opening 206 prior to insertion. Alternatively, as shown in FIG. 8, a portion 222 of outwardly threaded coupon 202 extending outwardly from internally threaded opening 206 in part 210 after insertion can be removed. The removal of additional coupon 222 can be by any now known or later developed technique, e.g., shearing, grinding, cutting and/or wire EDM cutting. Coupon 202 may be the same material as part 210 being repaired, and/or another material could be used including, but not limited to: single crystal N5, DS R-108, MarM247, GTD111, GTD 444, GTD262, depending on desired properties.

Outwardly threaded coupon 202 may also be brazed to inwardly threaded opening 206. The brazing material may include any now known or later developed brazing material appropriate for the superalloy of part 210 and/or coupon 202, such as but not limited to, pure braze materials BNi-2, BNi-5, BNi-9, DF4B, D15 or high melt/low melt mixtures, for example, MarM 247/D15 50/50 ratio. The brazing can take a variety of forms, and the portions of coupon 202 and opening 206 upon which brazing is applied can vary, e.g., some or all surfaces. In one embodiment, shown in FIG. 7, brazing material may be applied to at least one of outwardly threaded coupon 202 and inwardly threaded opening 206 prior to the inserting. That is, brazing material may be applied to an exterior of outwardly threaded coupon 202 and/or an interior of inwardly threaded opening 206, and then coupon 202 and opening 206 threadably coupled. Subsequently, a brazing heat treatment can be performed to braze the parts in place. Alternatively, as shown in FIG. 8, brazing may include applying the brazing material only along an outward-facing junction 224 between outwardly threaded coupon 202 and inwardly threaded opening 206. Accordingly, any amount of brazing material necessary to provide the material characteristics desired for the repaired area can be used.

The repaired area can also be treated to any variety of now known or later developed finishing steps, e.g., grinding, annealing, etc. FIGS. 3 and 4 show turbomachine parts 210 including repaired areas according to teachings of the disclosure, i.e., including coupon 202. While particular locations on parts 210 have been shown as repaired, the repairs can be applied in practically any location on parts 210.

Outwardly threaded coupon 202 with inwardly threaded opening 206 converts tensile stresses into shear stresses. That is, coupon 202 and opening 206 creates multiple surfaces under shear rather than tension, which allows the repair to have material properties, e.g., tensile strength, low cycle fatigue (LCF) and creep resistance, etc., as good as or better than the superalloy of part 210. In addition, the brazed joint formed between coupon 202 and opening 206 may be stronger than the superalloy materials under shear stress. In any event, conventionally unrepairable superalloy parts, such as those including Rene 108, can be repaired and returned to service. In addition, where repairable superalloy parts are damaged, coupons 202 made of superalloys having superior characteristics to the superalloy of part 210 can be used to provide improved material characteristics to the part.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A coupon (202, 222) for repairing a part (210), the coupon (202, 222) comprising:
an outwardly threaded body (204) configured to mate with an inwardly threaded opening (206) in a damaged area (200) of the part (210).

2. The coupon (202, 222) of claim 1, wherein the coupon (202, 222) and the part (210) include a superalloy.

3. The coupon (202, 222) of claim 1 or claim 2, further comprising a braze material between a least a portion (222) of the outwardly threaded body (204) and the inwardly threaded opening (206).

4. The coupon (202, 222) of any preceding claim, further comprising a braze material extending along at least a portion (222) of an outward-facing junction (224) between outwardly threaded body (204) and the inwardly threaded opening (206).

5. A method of repairing a part (210), the method comprising:
removing a damaged area (200) of the part (210) by forming an inwardly threaded opening (206) therein;
inserting an outwardly threaded coupon (202, 222) into the inwardly threaded opening (206); and
brazing the outwardly threaded coupon (202, 222) to the inwardly threaded opening (206).

6. The method of claim 5, wherein the brazing includes applying the brazing material to at least one of the outwardly threaded coupon (202, 222) and the inwardly threaded opening (206) prior to the inserting.

7. The method of claim 5, wherein the brazing includes applying the brazing material along an outward-facing junction (224) between the outwardly threaded coupon (202, 222) and the inwardly threaded opening (206).

8. The method of any of claims 5 to 7, wherein the coupon (202, 222) and the part (210) include a superalloy.

9. The method of any of claims 5 to 8, further comprising removing a portion (222) of the outwardly threaded coupon (202, 222) extending outwardly from the internally threaded opening in the part (210).

10. A turbomachine part (210), comprising:
a superalloy;
an inwardly threaded opening (206) in the superalloy; and
an outwardly threaded coupon (202, 222) mating with the inwardly threaded opening (206).

11. The turbomachine part (210) of claim 10, wherein the coupon (202, 222) includes the superalloy.

12. The turbomachine part (210) of claim 10 or claim 11, further comprising a braze material between a least a portion (222) of the outwardly threaded body (204) and the inwardly threaded opening (206).

13. The turbomachine part (210) of any of claims 10 to 12, further comprising a braze material extending along an outward-facing junction (224) between outwardly threaded body (204) and the inwardly threaded opening (206).
